# EUROPEAN PATENT SPECIFICATION

(11) **EP 1 905 808 B1**
(45) Date of publication and mention of the grant of the patent: **25.05.2011**
(21) Application number: 08000424.5
(22) Date of filing: 26.06.2001
(51) Int. Cl.: C09J 153/02, C09J 7/02

(54) **Adhesives with improved die-cutting performance**
Haftmittel mit verbesserter Stanzleistung
Adhésifs stables présentant une performance améliorée de découpage à l'emporte-pièce

(30) Priority: 27.06.2000 US 214308 P
(43) Date of publication of application: 02.04.2008
(62) Divisional of application: 01950605.4
(73) Proprietor: ExxonMobil Chemical Patents Inc., Baytown TX 77520-500 (US); THE DOW CHEMICAL COMPANY, Midland, Michigan 48674 (US)
(72) Inventor: Lechat, Jacques B., Braine L'Alleud (BE); Georjon, Olivier J., Sainte Adresse 76310 (FR); Gibert, Francois-X., Clermont Ferrand 63000 (FR); Marin, Gerard, Assat 64510 (FR)
(74) Representative: Dauncey, Mark Peter

(56) References cited:
- WO-A-91/13935
- WO-A-99/28405

## Description

The present invention is directed to elastomer or rubber based pressure-sensitive adhesive compositions particularly useful in label and tape manufacture.

During label manufacture, a laminate of a face stock, a pressure-sensitive adhesive layer, and a release liner, such as silicone-coated paper, is passed through an apparatus that converts the laminate into commercially useful labels and label stock. The converting operation processes involve printing, die-cutting, and matrix stripping to leave labels on a release liner, marginal hole punching, perforating, fan folding, guillotining and the like. It is important that the cutting action breaks the face stock and adhesive layer, but does not indent the release liner. Producing a series of labels on a backing sheet involves cutting around the label and removing the material between two labels (the matrix) while leaving the label itself attached to the backing sheet. (This is known as matrix-stripping.) It is important that the die-cutting machine make a clean break at operating speeds. Adhesives for these applications are formulated to have suitable viscoelastic and adhesive properties so that they can be applied to the release liner or face-stock back and will remain on the label after stripping with the required adhesion. But these properties make the adhesive film difficult to cut or break. They make die cutting difficult a>nd inconsistent, and cause adhesive strings and deposits on the cutting blade.

Die cutting involves cutting the laminate through to the release liner face. Other procedures involve cutting completely through the label laminate and include hole punching, perforating, and guillotining, particularly on flat sheets.

The cost of converting a laminate into a finished product, such as a label, is a function of the various processing operations' rates. Line speed depends on whether a printing step is involved. With no printing step, e.g. computer labels, speeds can reach 300 meters/minute. Otherwise, speeds of 50-100 meters/minute are typical. While all laminate layers impact convertibility cost, the adhesive layer can limit convertibility ease. The adhesive layer's viscoelastic nature causes this limitation - its high elasticity prevents it from flowing away from the cut line during die-cutting and also promotes its transfer to cutting blades during cutting. High adhesive elasticity also causes adhesive stringiness, which hinders matrix stripping. High elasticity also promotes adhesive layer reconnection after the layer is severed.

Achieving good convertibility does not necessarily coincide with achieving excellent adhesive performance. Adhesives must be formulated to fit needs. Important adhesive requirements include peel adhesion, tack, shear, and viscosity at various temperatures and on various substrates such as polymers, papers, glasses, and steels. Good, general-purpose adhesives may exhibit poor convertibility simply because the adhesive is difficult to cleanly sever. The adhesive may stick to a die or blade. Furthermore, within a speed range, use of a particular adhesive may result in breaking the matrix despite the fact that successful matrix stripping can occur at speeds on either side of the breaking speed. One goal is to provide adhesive systems where the adhesive has good die-cutting performance and where the matrix can be successfully stripped over the entire operating speed range.

Typical label adhesives are produced from acrylic polymer emulsions, which may be tackified by hydrocarbon- or natural-resin tackifiers. While these have good die-cutting performance, they require handling large volumes of liquid and subsequent liquid removal. At low temperature, acrylic-based adhesives perform poorer than hot-melt systems. Accordingly, hot melt adhesives would be preferred. Moreover, hot melts can be used at faster line application speeds over broader temperature ranges, can have more aggressive tack, and can be used under humid conditions.

Hot-melt pressure-sensitive adhesive systems are known and consist of tackified thermoplastic elastomers such as styrenic block copolymers, For example, styrenic block copolymers containing polystyrene and polybutadiene blocks and/or polyisoprene blocks are known. These materials are generally available as pure triblocks, (sometimes referred to as SIS and SBS copolymers), and diblocks (sometimes referred to as SI and SB copolymers). The materials are also available as mixtures of diblock and triblock materials (sometimes referred to as SIS + SI and SIS + SB). Examples of these materials include elastomers marketed by Dexco and by Kraton Polymers.

It is known to use diblock/triblock blends as the elastomeric component in hot-melt pressure-sensitive adhesives. It is further known that adhesive properties and viscosity can be controlled by varying the diblock-to-triblock ratio, varying the styrene content, varying the polymer molecular weight, and varying the block molecular weights within the polymers. Examples of materials that have been used are KRATON^{™} D 1113, containing 16% styrene and 56% diblock; QUINTAC^{™} 3433, marketed by Nippon Zeon, containing 55% diblock and 17% styrene; VECTOR^{™} 4114, containing 42% diblock and 17% styrene; and VECTOR^{™} 4113 containing 20% diblock and 17% styrene. VECTOR^{™} 4114 and VECTOR^{™} 4113 are Dexco products. While these materials have good adhesive properties when tackified and can be used in label-production hot melts, they lack optimum die-cutting properties. Furthermore, their low temperature adhesive properties are not optimum.

US Patent No. 5,663,228 concerns improving label adhesive die-cutability. But the offered solution is complicated, requires two particular block copolymer resins having certain glass-transition temperatures, and requires the choice of a tackifying resin that, when mixed with the two block copolymers, increases the difference between the two block copolymers' glass transition temperatures. Examples of styrenic copolymers that are used in the adhesive mixtures of US Patent No 5,663,228 are FINAPRENE^{™} 1205 available from Fina and KRATON^{™} 1107 available from Kraton Polymers.

US Patent No. 5,412,032 concerns linear SIS triblock/diblock copolymers that can improve label die-cutting. This is accomplished using block copolymers with a styrene content from 18-24 wt%, a polystyrene block molecular weight from 25,000-35,000, an overall molecular weight from 280,000-520,000, and a coupling efficiency of 20%-40%. The coupling efficiency corresponds to the triblock percentage in the overall copolymer's triblock content.

US Ser. No. 60/214,308, describes adhesive systems with improved die-cutting performance obtained by optimizing a diblock/triblock blend. We have now found that these improved properties may be obtained with a tetrablock and/or pentablock polymer, thus enabling a single polymerization reaction.

Recognizing that hot-melt die-cutting performance has to be improved, we analyzed the mechanical and physical aspects of the die-cutting process.

Surprisingly, die-cutting involves relatively low deformation rates and involves pushing the adhesive to the side of the cut line rather than sharply cutting it In successful die cutting, the adhesive must creep when subjected to knife action, flow away from the cut point, and not reform over the cut line.

The first aspect may be illustrated by assuming typical conditions of die-cutting operations, i.e. a machine line speed of 100 m/min, a rotating cylinder of 10 cm diameter, and face paper and adhesive layers with a thickness of 80 and 20 microns respectively. Since the diameter of the rotating cylinder is much larger (by a factor 100) than the overall thickness to indent, the effective vertical motion is only 10 cm/s when the knife starts to indent the face paper, and only 2 cm/s when the adhesive itself is indented.

The second aspect has been discovered with the help of finite-element simulations of the die cutting process performed with Abaqus Software. These showed that the adhesive is pushed away by the much stiffer face paper, well before the cutting knife starts to indent the adhesive layer. In other words, the adhesive layer flows under the pressure imparted by the cutting knife on the face stock. In most instances, no direct contact between the knife and the adhesive layer occurs.

Altogether, both the surprisingly low deformations rates involved in the die-cutting process, as well as the required adhesive flow during die-cutting, explains why water-based acrylic adhesives behave better than their triblock (e.g., SBS or SIS) counterparts. These two systems provide good examples of good and bad die-cutting behavior respectively.

Flow or viscoelastic behavior of hot-melt adhesives at a given temperature is conveniently captured by the two dynamic moduli known as G' and G": the loss modulus G" indicating viscous behavior, and the storage modulus G' indicating elastic behavior. The ratio of G" and G' is known as the loss factor Tangent delta (Tanδ).

The finding that the cutting mechanism pushes the adhesive away from the cut line rather than sharply cutting it, calls for a less elastic adhesive so that it permanently flows away from the cut line. Emphasis should be put on the low frequency behavior because of the knife's, surprisingly small vertical velocity during die-cutting.

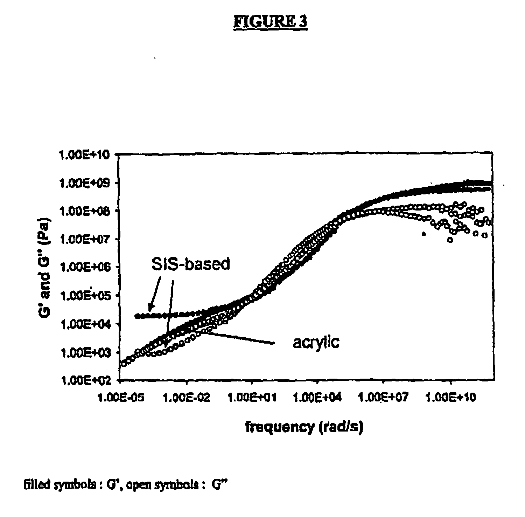

Dynamic mechanical analysis of acrylic systems shows indeed that the storage modulus G' continuously decreases with frequency, indicating no constant plateau at low frequencies. At the same time, there is a relatively high loss modulus G" at low frequency, essentially overlaying G'. This amplifies the adhesive's tendency to permanently deform and flow under stress, as shown in Figure 3. On the other hand, similar analysis of pure triblock adhesives shows a constant and relatively high plateau modulus G' (> 10000 Pa) in the low frequency region, much higher than the loss modulus G'. This reflects the adhesive's undesirable tendency to recover from deformation during die-cutting.

We have found that there is also a marginal difference in the high frequency behavior of acrylics and those of the present invention (glass transition region and glassy domain), especially in the glass transition location on the frequency axis. The rheological behavior at these frequencies can be modified by changing the tackifier package, which is well known to minimally influence die-cutting behavior.

Accordingly, we have found that, adhesives with good die-cutting performance usually fulfill the following criteria:

G' at room should temperature should decrease monotonically with frequency at frequencies below the glass transition region (typically 1.59 Hz (10 rad/s), down to a constant elastic plateau of storage modulus at the lowest frequencies, The elastic plateau preferably occurs at frequencies lower than 6000 Pa, more preferably lower than 5000 Pa, most preferably lower than 4000 Pa.

Usually, G' should intersect a value of 10000 Pa at a frequency that is preferably higher than 0.0048 Hz (0.03 rad/s); and more preferably higher than 0.0080Hz (0.05 rad/s); most preferably higher than 0.0159Hz (0.1 rad/s).

At that frequency, a loss factor Tanδ defined as the ratio G"/G' preferably comprises between 0.4 and 1; more preferably between 0.6 and I; and most preferably between 0.8 and 1.

Various hydrogenated block copolymers and their use in adhesives are described in US Patent No. 5,627,235. These however, involve hydrogenation and the removal of the unsaturation by the hydrogenation increases the plateau modulus which in turn adversely increases the elastic behavior under the die-cutting conditions.

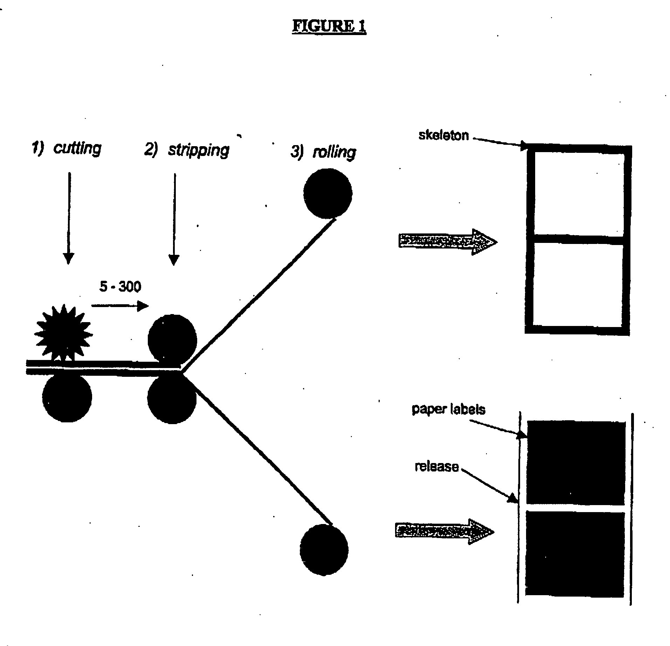

Figure 1 illustrates a typical die-cutting process.

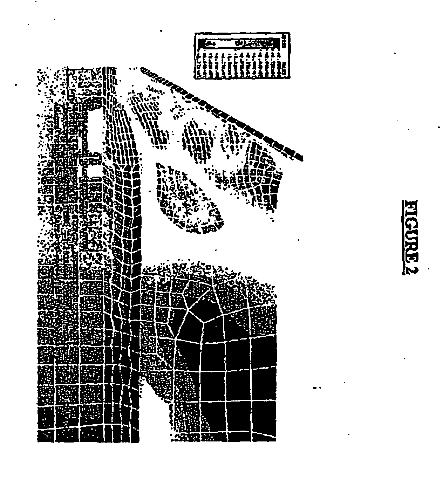

Figure 2 simulates die-cutting: 1 is the paper, 2 is the release coating, 3 is the adhesive layer, 4 is the label stock, and 5 is the die-cutting blade that cuts in an anticlockwise direction. The simulation shows how, as the knife crushes and breaks through the paper, the adhesive under the cut line is pushed away but does not cut. Accordingly, the more readily the adhesive flows and the less elastic it is the easier and cleaner the cut will be.
Figures 3, 4, 5, 6, 7 and 8 provide various plots of frequency vs. G', G", and Tanδ for the examples or comparative examples in this document.

A first aspect of the present invention provides an adhesive having a single glass transition temperature comprising: 50-80 % by weight tackifier based on the total weight of tackifier and copolymers and a styrenic block copolymer mixture having an overall styrene content of from 11-23 wt% of at least one styrene/isoprene/styrene triblock copolymer, and 40-80 % by weight of the total block copolymer mixture, of styrene/butadiene diblock copolymer having a number average molecular weight greater than 50,000 g/mole.

A second aspect of the present invention provides a hot melt pressure sensitive adhesive which is an adhesive according to the first aspect of the present invention.

A third aspect of the present invention provides use of an adhesive for the production of labels involving a die cutting operation comprising an adhesive according to the first aspect of the present invention.

The present invention provides an elastomer- or rubber-based, pressure-sensitive adhesive composition, that exhibits excellent convertibility. The adhesive achieves clean adhesive layer rupture when the face stock is cut through. At the same time, the adhesive provides excellent adhesive properties at ambient and reduced temperatures. It is particularly suitable for use in labels and may be applied as a hot melt.

If particular styrenic block copolymer rubbers are used in the label adhesive production, improved die-cutting performance may be accomplished.

The present invention therefore provides an adhesive with a single glass transition temperature, comprising a tackified styrenic block copolymer in which the styrenic block copolymer is diblock, triblock-copolymer mixture containing from 11-23 wt% styrene, preferably 12-20 wt% styrene The diblock material is a styrene/butadiene diblock copolymer, which contains from 40-80 % wt of diblock material that has a molecular weight greater than 50,000, alternatively greater than 65,000.

The overall styrene content may be from 15-20 wt%.

The triblock material may be a styrene/isoprene triblock copolymer of molecular weight between 45,000-300,000.

The diblock material may be a styrene/butadiene diblock copolymer and have a molecular weight of greater than 50,000 and up to 150,000 g/mole.

The tackifier may be a hydrocarbon resin. The tackifier may be an aliphatic C₅ resin. The tackifier may be an aromatic resin. The tackifier may be an aromatic/aliphatic C₅/C₉ resin. The resin may be hydrogenated.

The adhesive may have an elastic plateau of storage modulus at low frequencies below 6000 Pa at 20°C.

The adhesive may exhibit a G' which intersects a value of 10,000 Pa at a frequency higher than 0.0048 Hz (0.03 rad/s), when measured at 20 °C.

The adhesive may have a loss factor Tan delta comprised between 0.4 and 1 at the frequency at which the storage modulus intersects a value of 10000 Pa at a temperature of 20 °C.

The block copolymers are of styrene (S) and butadiene (B) and/or isoprene(I). The triblock copolymers have the formula SIS, and the diblock copolymers have the formula SB. We have found that to get good die-cutting performance, the polymer's styrene content should ranges from 11-23 wt%, alternatively 12-20 wt%, or 16-18 wt%. These parameters provide a good die cutting and adhesive performance combination.

Molecular weights are number average molecular weights and are measured in g/mole by Gel Permeation Chromatography (GPC), where the GPC system has been appropriately calibrated by using standards of similar polymers with known molecular weight.

Accordingly, the invention selects rubbers having the structure and rheology combinations that allow the adhesives to be applied as hot melts and that provide good die-cutability when they are used in pressure-sensitive adhesive systems. The rubbers have the following properties: an overall styrene content between 11-23 wt%, alternatively 12-20%; and a styrene/butadiene (SB) diblock copolymer, with a diblock content from 40-80 wt%, alternatively from 50-80 wt%, or more than 60-80 wt%. Present diblock copolymers can contain from 16-20 wt% styrene.

Some embodiments select the styrenic block copolymers with a molecular weight from 45,000-250,000 g/mole. In these or other embodiments, the styrenic blacks have a molecular weight from 4000-35,000 g/mole. Styrenic block molecular weights of 4000 g/mole or above typically provide suitable holding power, shear properties, and cohesive strength. Molecular weights less than 35,000 g/mole give a sufficiently pliable adhesive that has suitable pressure sensitivity. The unsaturated diene blocks should have a molecular weight of from 20,000-200,000 g/mole. Unsaturated diene blocks of molecular weight 20,000 g/mole, or greater provide a suitably strong polymer with good shear properties. Unsaturated diene blocks of molecular weight 200,000 g/mole or less process appropriately.

Some embodiments select styrene/isoprene block polymers, in which the triblock material molecular weight, particularly SIS triblocks, is between 45,000-300,000 g/mole, alternatively between 100,000-180,000 g/mole, or 100,000-150,000 g/mole. These or others select a styrene/butadiene diblock, with a material molecular weight between 50,000-150,000 g/mole, alternatively 65,000-1,10,000 g/mole, or 70,000-90,000 g/mole.

Molecular weight means peak molecular weight as measured by polystyrene calibrated Gel Permeation Chromatography (sometimes known as size exclusion Chromatography). Commercially available polystyrene standards were used for calibration, and the copolymer molecular weights were corrected according to Runyon et al, J. Applied Polymer Science, Vol. 13 Page 359 (1969) and Tung, L H J. Applied Polymer Science, Vol. 24 Page 953 (1979).

Chromatography used a Hewlett-Packard Model 1090 chromatograph equipped with a 1047A refractive index detector and four 300 mm x 7.5 mm Polymer Laboratories SEC columns packed with five micron particles. Of the five columns, two columns had 10⁵ angstrom pore size, one had 10⁴ angstrom pore size, and one had mixed pore sizes. The carrier solvent was HPLC grade tetrahydrofuran (THF) with a flow of 1 ml/min. Column and detector temperatures were 40°C, and run time was 45 minutes.

The following rheological properties are also important in these polymer systems. G' should monotonically decrease with frequency at frequencies below the T_{g} region, down to a constant elastic plateau of storage modulus at the lowest frequencies preferably lower than 6000 Pa. G' should become lower than 10 000 Pa at frequencies as high as possible, preferably higher than 0.0158 Hz (0.01 rad/s). The loss factor for Tanδ is preferably between 0.2 and 1 at this frequency.

Inventive adhesive tackifier additives are chosen based on the particular rubber that is used. But most tackifiers may be used. Preferred tackifiers are resins from aliphatic petroleum derivative streams containing 5-or-6-carbon-atom dienes and mono-olefins. The tackifiers range from materials that are normally liquid at room temperature to those that are normally solid at room temperature. The resins typically contain 40 weight percent or more of polymerized dienes. The dienes are typically piperylene and/or isoprene. Useful tackifiers include ESCOREZ^{™} 1310 LC manufactured by Exxon Mobil Chemical softening point 91°C, PICCOTAC^{™} 95 manufactured by Hercules, and the WINGTACK^{™} resin family manufactured by Goodyear (with the numerical designation being the softening point) such as WINGTACK^{™} 95, which is a solid resin having a softening point of about 95 °C, and WINGTACK^{™} 10, which is a liquid resin having a softening point of about 10°C.

Other suitable tackifiers include hydrogenated or non-hydrogenated resins, such as aromatic/aliphatic resins. ESCOREZ^{™} 2520 manufactured by ExxonMobil Chemical is a typical tackifier. Hydrogenated polycyclic resins (typically dicyclopentadiene resins such as ESCOREZ^{™} 5300, 5320, 5340, and 5380 manufactured by ExxonMobil Chemical) and the like may also be used, Hydrogenated, polycyclic aromatic modified resins, such as ESCOREZ^{™} 5690, 5600, and 5620, manufactured by ExxonMobil Chemical, may also be used. Hydrogenated aromatic resins in which a substantial portion, if not all, of the benzene rings are converted to cyclohexane rings (for example, the REGALREZ^{™} family of resins manufactured by Hercules such as REGALREZ^{™} 1018, 1033, 1065, 1078, and 1126 and REGALITE^{™} R-100, and the ARKON^{™} family of resins from Arakawa Chemical such as ARKON^{™} P-85, P-100, P-115 and P-125) may also be used.

Rosin esters, polyterpenes, and other tackifiers, which are compatible with the polyisoprene and polybutadiene phases and to some degree with the polystyrene end blocks, can also be added Other additives include plasticizer oils such as SHELLFLEX^{™} 371, manufactured by Shell, and KAYDOL^{™} mineral oil, manufactured by Witco, which are soluble in both the polyisoprene and polybutadiene phases.

The tackifier may be present from 60% by weight, , based on the total weight of tackifier and copolymers. It may be present at up to 70% by weight. Conversely, the block copolymers are present from 20%, alternatively 30%, by weight based on the weight of the tackifier and the copolymers and up to 50%, alternatively to 45 %, by weight based on the weight of the tackifier and the copolymers. In some embodiments, the resin additive is preferably a mixture of a normally solid tackifier such as ESCOREZ^{™} 1310 LC and a normally liquid tackifier such as WINGTACK^{™} 10 or a plasticizer oil such as SHELLFLEX^{™} 371.

Tackifiers, also known as hydrocarbon or petroleum resins, are well known and are generally produced by Friedel-Crafts or thermal polymerization of various feeds, which may be pure monomer feeds or refinery streams containing mixtures of various unsaturated materials. Generally speaking, the purer the feed the easier the polymerization. For example, pure styrene, pure α-methyl styrene and these mixtures are easier to polymerize than a C₈/C₉ refinery stream. Similarly, pure or concentrated piperylene is easier to polymerize than C₄ to C₆ refinery streams. But these pure monomers are more expensive to produce than the refinery streams, which are often large volume refining byproducts.

Aliphatic hydrocarbon resins can be prepared by cationic polymerization of a cracked petroleum feed containing C₄, C₅, and C₆ paraffins, olefins, and diolefins also referred to as "C₅ monomers". These monomer streams are comprised of cationially polymerizable monomers such as butadiene, 1,3-pentadiene (piperylene) along with cyclopentene, pentene, 2-methyl-2-butene, 2-methyl-2-pentene, isoprene, cyclopentadiene, and dicyclopentadiene. The refining streams are purified usually by fractionation and impurity removal to obtain these feeds.

Polymerizations are catalyzed using Friedel-Crafts catalysts such as unsupported Lewis acids (e.g., boron trifluoride (BF₃), complexes of boron trifluoride, aluminum trichloride (AlCl₃), or alkyl-aluminium halides, particularly chloride). In addition to the reactive components, non-polymerizable components in the feed include saturated hydrocarbons, which can be co-distilled with the unsaturated components such as pentane, cyclopentane, or 2-methylpentane. This monomer feed can be co-polymerized with other C₄ or C₅ olefins or dimers. The feed should be purified (typically by fractionation) to remove unsaturated materials that adversely affect the polymerization reaction or give undesirable color to the final resin (for example isoprene). Generally, C₅ aliphatic hydrocarbon resins are synthesized using a piperylene concentrate stream that is fractionation-enriched to increase the piperylene content and to reduce the difficult-to-polymerize olefin and diolefin content

Typically, the feedstream includes at least 20 wt %, alternatively 30 wt %, or 50 wt %, monomer and up to 80 wt %, alternatively 70 wt %, or 30 wt %, solvent. The solvent may be aromatic or aliphatic. Mixtures of aromatic and aliphatic solvents may also be used and it also may be recycled. The solvent may be a non-polymerizable feed component.

The feedstream may include at least C₄-C₆ monomers, from which cyclopentadiene and methylcyclopentadiene components may be removed by heating between 100°C and 160°C and fractionally distilling. The monomers may include at least one of isobutylene, butadiene, 2-methyl-2-butene, 1-pentene, 2-methyl-1-pentene, 2-methyl-2-pentene, 2-pentene, cyclopentene, isoprene, cyclohexene, 1,3-pentadiene, 1,4-pentadiene, isoprene, 1,3-hexadiene, 1,4-hexadiene, cyclopentadiene, and dicyclopentadiene.

In accordance with another aspect, the feedstream can include at least 30 wt %, alternatively 50 wt %, of C₅ monomers, as described above and at least 5 wt %, alternatively 15 wt % of a co-feed including at least one of pure monomer, C₉ monomers, and terpenes. Likewise, the feedstream can include up to 95 wt %, alternatively up to 85 wt % of C₅ monomers, as described above and up to 70 wt %, alternatively up to 50 wt %, of a co-feed including at least one of pure monomer, C₉ monomers, and terpenes.

The feed may also contain aromatic olefins such as styrene, indene, α-methylstyrene, β-methylstyrene, indene, substituted indenes, such as methylindenes, vinyl toluenes, and their derivatives. The aromatic olefins are typically present at levels of at least 1 wt %, and at levels up to 50 wt %, alternatively up to 30 wt %, or 10 wt %.

Polymerization may be by continuous or batch processes. A batch process reaction time is usually at least 30 minutes, alternatively 60 minutes, and no greater than 8 hours, alternatively 4 hours. Polymerization may be stopped by removing the catalyst from the hydrocarbon resin, for example, by filtration. The hydrocarbon resin may be removed from a fixed bed reactor, which includes the catalyst. Polymerization temperatures are at least -50°C to 150°C, alternatively -20°C to 100°C. Reaction temperature significantly affects resin properties. Higher-molecular-weight and high-softening-point resins are prepared at lower reaction temperatures. The hydrocarbon resin may be stripped to remove unreacted monomers, solvents, and low-molecular-weight oligomers. These unreacted monomers, solvents, and low-molecular-weight oligomers may be recycled.

The monomer feed can be co-polymerized with C₄ or C₅ olefin or dimers as chain transfer agents. Up to 40 wt %, alternatively up to 20 wt %, of chain transfer agents may be added to obtain resins with lower molecular weight and narrower molecular weight distributions than can be prepared using monomers alone. Chain transfer agents terminate polymer chain growth such that polymer initiation sites regenerate. Components that behave as chain transfer agents in these reactions include but are not limited to isobutylene, 2-methyl-1-butene, 2-methyl-2-butene, or dimers or oligomers of these species. The chain transfer agent can be added to the reaction in pure form or diluted in a solvent.

Typically, aromatic solvents are used, such as toluene, xylenes, or light aromatic petroleum solvents. These solvents can be used fresh or recycled from the process. The solvents generally contain less than 200 ppm water, alternatively less than 100, or less than 50 ppm water.

Typically, the resulting resin has a number average molecular weight (Mn) of at least 400, a weight average molecular weight (Mw) of at least 500, a Z average molecular weight (Mz) of at least 700, and a polydispersity (PD) as measured by Mw/Mn of at least 1.5 where Mn, Mw, and Mz are determined by Gel Permeation chromatography. Similarly, the resin has a number average molecular weight (Mn) up to 2000, a weight average molecular weight (Mw) of up to 3500, a Z average molecular weight (Mz) of up to 15,000 and a polydispersity (PD) as measured by Mw/Mn up to 4,

Where hydrogenated resins are used, the hydrogenation may be carried out via molten-resin' or resin-solution-based processes by either batchwise or, more commonly, continuous processes. Supported monometallic and bimetallic catalysts based on Group-6, -8, -9, -10 or -11 elements are typically used for hydrocarbon resin hydrogenation. Catalysts such as supported nickel (for example, nickel on alumina, nickel on charcoal, nickel on silica, nickel on kieselguhr, etc), supported palladium (for example, palladium on silica, palladium on charcoal, palladium on magnesium oxide, etc) and supported copper and/or zinc (for example copper chromite on copper and/of manganese oxide, copper and zinc on alumina, etc) are good hydrogenation catalysts. The support material typically consists of porous inorganic refractory oxides such as silica, magnesia, silica-magnesia, zirconia, silica-zirconia, titania, silica-titania, alumina, silica-alumina, ahunina-silicate, etc, with supports containing γ-alumina being highly preferred. Preferably, the supports are essentially free of crystalline molecular sieve materials. Mixtures of the foregoing oxides are also contemplated, especially homogeneous mixtures. Among the useful support materials in the present invention are the supports disclosed in the US Patent Nos. 4,686,030, 4,846,961, 4,500,424, and 4,849,093. Some embodiments select alumina, silica, carbon, MgO, TiO₂, ZrO₂, FeO₃ or their mixtures as supports.

Any of the known processes for catalytically hydrogenating hydrocarbon resins can be used, particularly the processes of US 5,171,793, US 4,629,766, US 5,502,104 and US 4,328,090 and WO 95/12623. Generic hydrogenation conditions include reaction temperatures of 100°C- 350°C and hydrogen pressures of 5 atmospheres (506 kPa)-300 atmospheres (30390 kPa), for example, 10 to 275 atm. (1013 kPa to 27579 kPa). Some embodiments select hydrogenation temperature in the range 180°C to 320 °C. These or other embodiments select pressure of 15195 kPa to 20260 kPa hydrogen. The hydrogen-to-feed volume ratio to the reactor under standard conditions (25°C, 1 atm (101 kPa) pressure) typically can range from 20-200. For the production of water-white resins, 100-200 is selected.

Another suitable process for resin hydrogenation is described in EP 0082726. This document describes hydrogenation of a catalytic or thermal petroleum resin using nickel-tungsten catalyst on a γ-alumina support where the hydrogen pressure is 1.47 x 10⁷-1.96 x 10⁷ Pa and the temperature is 250-330°C. Thermal hydrogenation is usually performed at 160 - 320°C, at a pressure of 9.8 x 10⁵ to 11.7 x 10⁵ Pa and typically for 1.5 - 4 hours. After hydrogenation, the reactor mixture may be flashed and further separated to recover the resin. Steam distillation may be used to eliminate oligomers, preferably without exceeding 325°C.

Some embodiments select catalysts comprising nickel and/or cobalt on one or more of molybdenum, tungsten, alumina, or silica supports. These or other embodiments select 2 to 10 wt% of nickel oxide and/or cobalt oxide on the support. After preparation, the support contains 5 - 25 wt% tungsten or molybdenum oxide. Alternatively, the catalyst contains 4 - 7 wt % nickel oxide and 18 - 22 wt % tungsten oxide. This process and suitable catalysts are described in greater detail in US Patent No. 5,820,749.

In another embodiment, the hydrogenation may be carried out using the process and catalysts described in US Patent No. 4,629,766. In particular, nickel-tungsten catalysts on γ-alumina are used.

While the pressure-sensitive invention adhesive formulations exhibit excellent low and ambient temperature performance, as well as good die cutting performance, they may also enhance elevated-temperature performance. This may be accomplished by cross-linking such as with electron beam (EB) and ultraviolet (UV) radiation and chemical cross-linking techniques. If employed, tackifying additives should be substantially saturated so that all of the cure energy goes into cross-linking the adhesives' elastomeric components.

The adhesive formulations may also contain well-known additives such as anti-block, anti-static, antioxidants, UV stabilizers, neutralizers, lubricants, surfactants and/or nucleating agents. These can include silicon dioxide, titanium dioxide, polydimethylsiloxane, talc, dyes, wax, calcium stearate, calcium carbonate, carbon black, and glass beads.

Invention adhesives may be used as pressure-sensitive, hot-melt or contact adhesives and used in applications such as tapes, labels, paper impregnation, hot-melt adhesives, including woodworking, packaging, bookbinding or disposables, sealants, rubber compounds, pipe wrapping, carpet backing, contact adhesives, road-marking or tire construction. They are particularly useful as hot-melt pressure-sensitive adhesives used for tapes and labels where they impart improved die-cutting performance.

The following examples illustrate, but do not limit the invention.

Hot-melt pressure-sensitive adhesives were prepared by mixing the block copolymers with the tackifying resins in a 300 ml laboratory z blade mixer, at 145 °C. A small amount of phenolic antioxidant was blended in to prevent the adhesive's degradation during blending. The total mixing time was about 70 minutes.

ESCOREZ^{™} 1310 from ExxonMobil Chemical and WINGTACK^{™} 10 from Goodyear were used as tackifiers.

The final blend viscosity was measured with a Brookfield viscosimeter according to a procedure based on ASTM D 3236-88

The pressure sensitive adhesives were applied to a silicone coater paper at a coating weight of about 20 g/m², using an Acumeter laboratory coater with a slot die for the molten adhesive formulation at 165°C. Lamination was done according to industry practice by transfer coating from a silicone coater paper release substrate to a 80 g/m² vellum paper frontal substrate.

The adhesive performances were evaluated according to the following test methods published by FINAT, P.O. Box 85612 NL-2508 CH The Hague.

FTM 1 for the peel adhesion at 180 degree

FTM 9 for the loop tack measurements

FTM 7 for the shear resistance

Migration was evaluated by comparing the whiteness of the paper frontal substrate after ageing at 60 and 70 °C for one and two weeks. Whiteness was evaluated with a Hunterlab spectrophotometer.

Dynamic rheological properties at 20°C were determined on RDAII and SR-500 instruments manufactured by Rheometric Scientific, Piscataway, New Jersey. The former gives access to frequencies between 0.00159 to 15.9 Hz (10⁻² to 100 rad.s⁻¹) and temperatures lower than 20°C (down to -70°C) to reach the glassy region obtained at higher frequencies. The SR-500 instrument, which covers a frequency range between 1.59x10⁻⁶ to 15.9 Hz (10⁻⁵ to 100 rad.s)⁻¹ at room temperature was used for the terminal zone (lower frequencies). We used a plate-plate geometry for all experiments. The diameter of the plate-plate fixture (from 25mm to 5mm) decreases as temperature decreases to maintain the actual rheometer torque between measurable limits. Frequency sweeps were carried out at deformation levels well within the linear viscoelastic region. To broaden the accessible experimental frequencies range, time-temperature superposition was applied with care. Measurements in frequencies from IE - 04 to IE + 02 were made at 20°C whereas at higher frequencies, lower temperatures were used, and the measurements were extrapolated to 20°C. This was done because phase-structure changes may occur at high temperature.

To ensure that experiments were conducted on bubble-free specimens, samples were degassed overnight under primary vacuum at about 90°C. Disks of adequate diameter were then compression molded, at a temperature systematically lower than the mixing temperature (145°C).

### EXAMPLES

### Comparative Example 1

A hot melt formulation was prepared with 31 wt% of a pure triblock copolymer 27 wt% of WINGTACK^{™} 10, and 42 wt% of ESCOREZ^{™} 1310.

| | |
|---|---|
| Brookfield Viscosity (175°C - mPa.s) | 7500 |
| 180° peel strength - N/25mm | |
| Room temperature - glass | 35.0 cf |
| 3°C - glass | 26.5 cf |
| Room temperature - Polyethylene | 20.5 cf |
| 3°C - Polyethylene | 19.0 cf |
| Loop Tack - N | |
| - glass at room temperature | 25.0 cf |
| - glass at 3°C | 16.5 pt |
| Loop Tack - N | |
| - Polyethylene at room temperature | 16.0 |
| - Polyethylene at 3° C | 4.2 |
| Shear - room temperature - hours | |
| Steel - 25*25mm -1kg | > 150 |
| Migration - % reflection | |
| 1 week 60°C | 87.3 |
| 1 week 70°C | 81.9 |

| | |
|---|---|
| pt means paper lear cf means cohesive failure af means adhesive failure | |

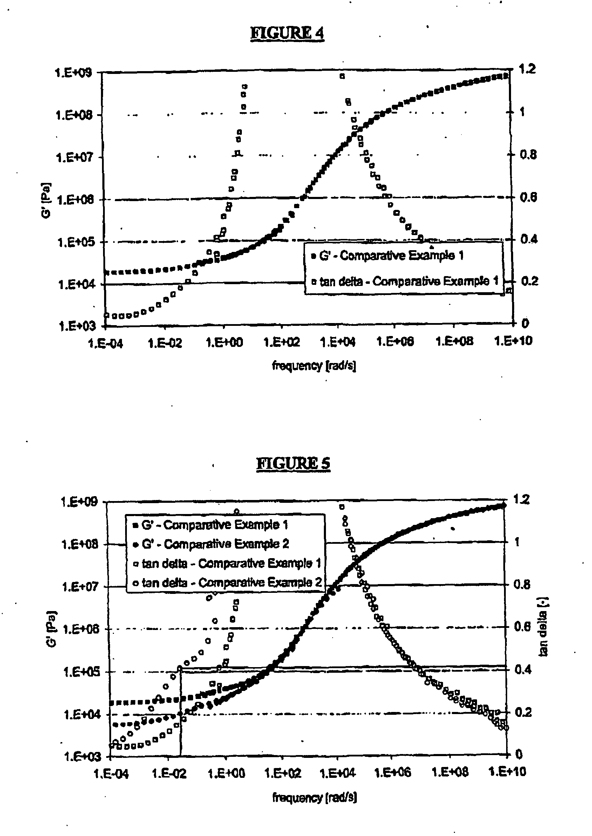

Dynamic rheological properties are shown Figure 4. Note that the plateau modulus at low frequencies is 18 000 Pa, i.e. > 10 000 Pa.

The hot melt adhesive showed poor die-cutting behavior.

### Comparative Example 2

46 wt% of SIS triblock with a molecular weight of 176 000 g/mole and a styrene content of 16 wt% and 54 wt% of a SI diblock with a molecular weight of 86 000 g/mole and a styrene content of 16 wt% were mixed to make an SIS/SI blend. The blend had an overall styrene content of 16 wt%. This was used to make a hot melt formulation with 31 % of the polymer blend, 27 % of WINGTACK^{™} 10, and 42 % of ESCOREZ^{™} 1310 and 0.3 % IRGANOX^{™} 1076. The resulting hot melt showed the following characteristics:

| | |
|---|---|
| Brookfield Viscosity (165°C - mPa.s) | 12900 |
| 180° peel strength - N/25mm | |
| Room temperature - glass | 36.0 cf + pt |
| 3°C - glass | 24.3 pt |
| Room temperature - PE | 24.6 af |
| 3°C - PE | 23 pt |
| Loop Tack - N | |
| - glass at room temperature | 26.9 of |
| - glass at 3°C | 12 pt 7 af |
| Loop Tack-N | |
| - Polyethylene at room temperature | 20.7 af |
| Shear - room temperature - hours | 147 -157 cf |
| Steel- 25*25mm -1kg | |
| Migration - % reflection | |
| 1 week 60°C | 89 |
| 2 weeks 60°C | 90 |
| 1 week 70°C | 84 |
| 2 weeks 70°C | 85 |

Dynamic Theological properties are shown in Figure 5, together with those of Comparative Example 1. Note that the plateau modulus at low frequencies is 6 000 Pa. G' intersects a value of 10 000 Pa at a frequency of 0.0048 Hz (0.03 rad/s), where Tanδ equals 0.4.

### Comparative Example 3

29 wt% of a SIS triblock with a molecular weight of 130 000 g/mole and a styrene content of 17 wt% and 71 wt% of a SI diblock with a molecular weight of 89 000 g/mole and a styrene content of 16.1 wt% were mixed to make an SIS/SI polymer blend. A hot melt formulation was prepared with 31 % of the blend, 27 wt% of WINGTACK^{™} 10, and 42 wt% of ESCOREZ^{™} 1310 and 0.4 % IRGANOX^{™} 1076.

| | |
|---|---|
| Brookfield viscosity at 175 °C (mPa.s) | 4200 |
| 180° Peel on glass | |
| 300 mm/min - room temperature | 33 pt |
| (N/25mm) | |
| 300 mm/min - 3°C | 27.5 pt |
| (N/25mm) | |
| 180° Peel on PE | |
| 300 mm/min - room temperature | |
| (N/25mm) | |
| 300mm/min-3°C | 18.5 pt |
| (N/25mm) | |
| Loop tack on glass | |
| 300mm/min-rt-N | 35 af |
| 300nm/min-3°C-N | 0.7 af |
| Loop tack on polyethylene (N) | |
| 300 mm/min - room temperature | 25 af |
| 300 mm/min - 3°C | 18 pt |
| Shear at RT | 10 - 27 cf |
| steel-25*25mn2-1kg | |
| (hours) | |
| Migration | |
| (% reflection) | |
| 1 week 60°C | 89.0 cf |
| 2 weeks 60°C | 86.0 cf |
| 2 weeks 70°C | 79.5 cf |

| | |
|---|---|
| pt means paper tear af means adhesive failure cf means cohesive failure | |

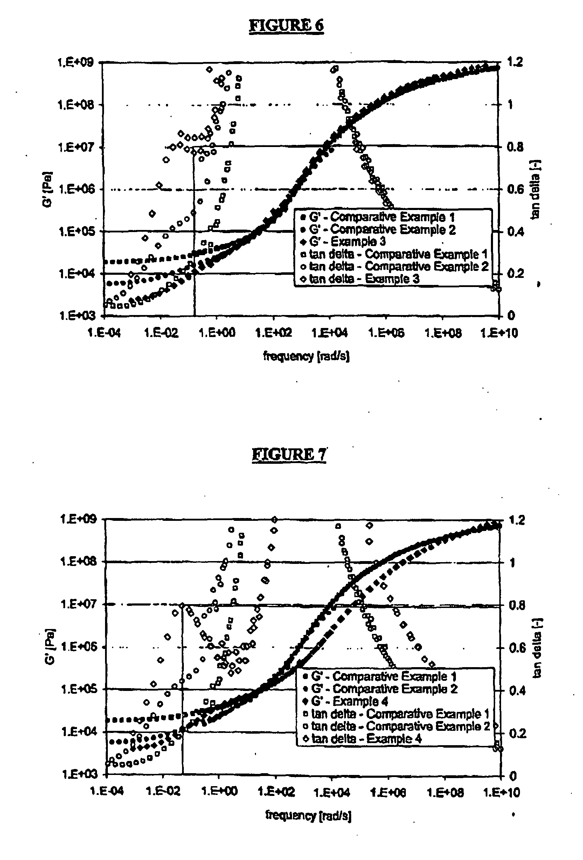

The adhesives' dynamic rheological properties are shown Figure 6, where they are compared with those of Comparative Examples 1 and 2. Note that the plateau modulus at low frequencies is 2 000 Pa, lower than for both of the Comparative Examples. G' intersects a value of 10 000 Pa at a frequency of 0.0024 Hz (0.15 rad/s), where Tanδ equals 0.8.

These valves indicate that the polymer blend will be useful and have benefits in die cutting.

### Comparative Example 4

25 wt% of a SIS triblock with a molecular weight of 129 000 g/mole and a styrene content of 16.5 wt% and 75 wt% of a SI diblock with a weight-average molecular weight of 106 000 g/mole and a styrene content of 16.6 wt% were mixed to form an SIS/SI polymer blend. A hot melt formulation was prepared with 43 wt% of the blend, 17 wt% of WINGTACK^{™} 10, 40 wt% of ESCOREZ^{™} 1310 and 0.4 wt% IRGANOX^{™} 1076. In this case, the use of less liquid resin (WINGTACK^{™} 10) reduces resin migration through the face paper. The resulting hot melt showed the following characteristics.

| | |
|---|---|
| 180° peel strength - N/25mm | |
| room temperature - glass | 31.9 cf |
| 3°C - glass | 24.2 pt |
| Room temperature - Polyethylene | 27.0 cf |
| 3°C - Polyethylene | 20.7 af |
| Loop Tack | |
| - glass at room temperature | 26.6 af |
| - glass at 3°C | 18.6pt |
| Loop Tack - N | |
| - Polyethylene at room temperature | 14.8 af |
| - Polyethylene at 3°C | 6.6 jerking |
| Shear - room temperature - hours steel - 25*25mm-1kg | |
| Migration (% reflexion) | |
| 1 week 60°C | 91 |
| 2 weeks 60°C | 91 |
| 1 week 70°C | 88 |
| 2 weeks 70°C | 88 |

The adhesives' dynamic rheological properties are compared with those of Comparative Examples I and 2 in Figure 5. Note that the plateau modulus at low frequencies is 4 000 Pa, lower than for both Comparative Examples. G' intersects a value of 10 000 Pa at a frequency of 0.0080 Hz (0.05 rad/s), where Tanδ equals 0.8.

These valves indicate that adhesives with this polymer blend will enhance die cutting.

### Example 5

35 wt% of a SIS triblock with a molecular weight of 130 000 g/mole and a styrene content of 17 wt% and 65 wt% of a SB diblock with a molecular weight of 70 000 g/mole and a styrene content of 16.6 wt% were combined to form an SIS/SB polymer blend. A hot melt formulation was prepared with 31 wt% of the blend, 27 wt% of WINGTACK^{™} 10, 21 wt% of ESCOREZ^{™} 1310 and 21 wt% of ECR™-373 and 0.3 wt% IRGANOX^{™} 1076. The resulting hot melt showed the following characteristics.

| | |
|---|---|
| Brookfield Viscosity at 175°C - mPa.s | 7280 |
| Shear at RT (hours) | |
| Steel. 25*25mm2 - 1kg | 31-54 |
| 180° Peel on glass (N/25 mm) | |
| 300 mm/min - room temperature | 32,5 cf+ pt |
| 300 mm/min - 3°C | 19,2 pt |
| 180° Peel on Polyethylene (N/25 mm) | |
| 300 mm/min - room temperature | 20,6 af/cf |
| 300 mm/min - 3°C | 18,4 pt |
| Loop tack on glass (N) | |
| 300 mm/min - room temperature | 22,9 af |
| 300 mm/min - 3°C | 18,8 pt |
| Loop tack on polyethylene (N) | |
| 300 mm/min - room temperature | 16,5 af |
| 300 mm/min - 3°C | 7,1 j |
| MIGRATION (% reflexion) | |
| 1 week 60°C | 86.1 |
| 2 weeks 60°C | 83.7 |
| 1 week 70°C | 81.0 |
| 2 weeks 70°C | 72.7 |

| | |
|---|---|
| j indicates jerking | |

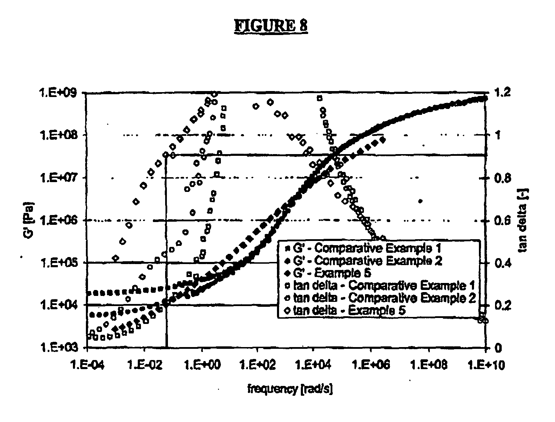

The dynamic rheological properties are compared with those of Comparative Examples 1 and 2 in Figure 8. Note that the plateau modulus at low frequencies is 2 500 Pa, lower than for both Comparative Examples. G' intersects a value of 10 000 Pa at a frequency of 0.0080 Hz (0.05 rad/s), where Tanδ equals 0.9.

These valves indicate that adhesives with this polymer blend improve in die cutting.

## Claims

1. An adhesive having a single glass transition temperature comprising:
50-80 % by weight tackifier based on the total weight of tackifier and copolymers and
a styrenic block copolymer mixture having an overall styrene content of from 11-23 wt% of at least one styrene/isoprene/styrene triblock copolymer, and 40-80 % by weight of the total block copolymer mixture, of styrene/butadiene diblock copolymer having a number average molecular weight greater than 50,000 g/mole.

2. An adhesive according to Claim 1 in which the overall styrene content is from 15-20wt%.

3. An adhesive according to Claim 1 in which the styrene/butadiene diblock copolymer has a number average molecular weight of greater than 50,000 and up to 150,000 g/mole.

4. An adhesive according to Claim 1 in which the styrene/butadiene diblock comprises 50-80 % by weight of the total block copolymer mixture.

5. An adhesive according to Claim 1 in which the tackifier is a hydrocarbon resin.

6. An adhesive according to Claim 5 in which the tackifier is an aliphatic C₅ resin.

7. An adhesive according to Claim 5 in which the tackifier is an aromatic resin.

8. An adhesive according to Claim 5 in which the tackifier is an aromatic/aliphatic C₅/C₉ resin.

9. An adhesive according to Claim 8 in which the resin is hydrogenated.

10. An adhesive according to Claim 1 having an elastic plateau of storage modulus at low frequencies below 6000 Pa at 20 °C.

11. An adhesive according to Claim t in which G' intersects a value of 10,000 Pa at a frequency higher than 0.0048 Hz (0.03 rad/s), when measured at 20°C.

12. An adhesive according to Claim 1 having a loss factor Tan delta comprised between 0.4 and 1 at the frequency at which the storage modulus intersects a value of 10,000 Pa at a temperature of 20 °C.

13. A hot melt pressure sensitive adhesive which is an adhesive according to Claim 1.

14. Use of an adhesive for the production of labels involving a die cutting operation comprising an adhesive according to Claim 1.

15. An adhesive according to Claim 1 wherein the storage modulus plateau occurs at frequencies below 1.59 Hz (10 rad/s), when measured at a temperature of 20 °C.

16. An adhesive according to Claim 1 wherein the tackifier comprises a rosin ester and/or a polyterpene.

17. An adhesive according to Claim 1 wherein the tackifier is compatible with the polybutadiene phase.

18. An adhesive according to Claim 1 in which the styrene/isoprene/styrene triblock has a molecular weight between 100,000-180,000 g/mole and the styrene/butadiene diblock has a molecular weight between 65,000-110,000 g/mole, the adhesive containing a mixture of tackifier additive including one that is liquid at room temperature and at least one that is solid at room temperature, in a total of 50-80 percent by weight of the adhesive.

## Patentansprüche

1. Klebstoff mit einer einzigen Glasübergangstemperatur, umfassend:
50-80 Gew.-% eines Klebrigmachers, basierend auf dem Gesamtgewicht des Klebrigmachers und Copolymeren und
eine styrolhaltige Blockcopolymermischung mit einem Gesamtstyrolgehalt von 11-23 Gew.-% von mindestens einem Styrol-Isopren-Styrol-Triblock-Copolymeren, und 40-80 Gew.-% der Gesamtblockcopolymermischung des Styrol/Butadien-Diblock-Copolymers mit einem zahlenmittleren Molekulargewicht von mehr als 50000 g/mol.

2. Klebstoff nach Anspruch 1, in dem der Gesamtstyrolgehalt 15-20 Gew.-% beträgt.

3. Klebstoff nach Anspruch 1, in dem das Styrol/Butadien-Diblock-Copolymer ein zahlenmittleres Molekulargewicht von mehr als 50000 und bis zu 150000 g/mol aufweist.

4. Klebstoff nach Anspruch 1, in dem das Styrol/Butadien-Diblock-Copolymer 50-80 Gew.-% der Gesamtblockcopolymermischung umfasst.

5. Klebstoff nach Anspruch 1, in dem der Klebrigmacher ein Kohlenwasserstoffharz ist.

6. Klebstoff nach Anspruch 5, in dem der Klebrigmacher ein aliphatisches C₅-Harz ist.

7. Klebstoff nach Anspruch 5, in dem der Klebrigmacher ein aromatisches Harz ist.

8. Klebstoff nach Anspruch 5, in dem der Klebrigmacher ein aromatisches/aliphatisches C₅/C₉-Harz ist.

9. Klebstoff nach Anspruch 8, in dem das Harz hydriert ist.

10. Klebstoff nach Anspruch 1, der ein elastisches Plateau eines Speichermoduls bei niedrigen Frequenzen unterhalb 6000 Pa bei 20°C aufweist.

11. Klebstoff nach Anspruch 1, wobei G' bei einer höheren Frequenz als 0,0048 Hz (0,03 rad/s), gemessen bei 20°C, einen Wert von 10000 Pa schneidet.

12. Klebstoff nach Anspruch 1, der bei der Frequenz, bei welcher der Speichermodul einen Wert von 10000 Pa bei einer Temperatur von 20°C schneidet, einen Verlustfaktor Tan Delta zwischen 0,4 und 1 umfasst.

13. Schmelzhaftklebstoff, der ein Klebstoff nach Anspruch 1 ist.

14. Verwendung von einem Klebstoff für die mit einem Stanzvorgang verbundene Herstellung von Etiketten, die einen Klebstoff nach Anspruch 1 erfordert.

15. Klebstoff nach Anspruch 1, wobei das Speichermodulplateau bei Frequenzen unterhalb 1,59 Hz (10 rad/s) auftritt, gemessen bei einer Temperatur von 20°C.

16. Klebstoff nach Anspruch 1, wobei der Klebrigmacher einen Harzester und/oder ein Polyterpen umfasst.

17. Klebstoff nach Anspruch 1, wobei der Klebrigmacher mit der Polybutadienphase verträglich ist.

18. Klebstoff nach Anspruch 1, wobei der Styrol-Isopren-Styrol-Triblock ein Molekulargewicht zwischen 100000-180000 g/mol und der Styrol/Butadien-Diblock ein Molekulargewicht zwischen 65000-110000 g/mol aufweist, wobei der Klebstoff eine Mischung eines Klebrigmacherzusatzmittels, einschließend einen, der bei Raumtemperatur flüssig ist, und mindestens einen, der bei Raumtemperatur fest ist, in einer Gesamtmenge von 50-80 Gew.-% des Klebstoffes, enthält.

## Revendications

1. Adhésif possédant une seule température de transition vitreuse comprenant :
50 à 80 % en poids d'un agent collant, sur la base du poids total de l'agent collant et des copolymères et
un mélange de copolymères bloc styréniques ayant une teneur totale en styrène de 11 à 23% d'au moins un copolymère tribloc styrène/isoprène/styrène, et 40 à 80 % en poids du mélange de copolymères bloc total d'un copolymère dibloc styrène/butadiène ayant une masse moléculaire moyenne en nombre supérieure à 50.000 g/mole.

2. Adhésif selon la revendication 1 dans lequel la teneur totale en styrène est de 15 à 20 % en poids.

3. Adhésif selon la revendication 1, dans lequel le copolymère dibloc styrène/butadiène possède une masse moléculaire moyenne en nombre supérieure à 50.000 et allant jusqu'à 150.000.

4. Adhésif selon la revendication 1, dans lequel le copolymère dibloc styrène/butadiène comprend de 50 à 80 % en poids du mélange de copolymères bloc total.

5. Adhésif selon la revendication 1 dans lequel l'agent collant est une résine hydrocarboné.

6. Adhésif selon la revendication 5, dans lequel l'agent collant est une résine C₅ aliphatique.

7. Adhésif selon la revendication 5, dans lequel l'agent collant est une résine aromatique.

8. Adhésif selon la revendication 5, dans lequel l'agent collant est une résine C₅/C₉ aromatique/aliphatique.

9. Adhésif suivant la revendication 8, dans lequel la résine est hydrogénée.

10. Adhésif selon la revendication 1, possédant un plateau élastique de module de conservation en dessous de 6.000 Pa à basses fréquences, lorsqu'il est mesuré à 20°C.

11. Adhésif selon la revendication 1, dans lequel G' est à un point d'intersection avec une valeur de 10.000 Pa à une fréquence supérieure à 0,0048 Hz (0,03 rad/s), lorsqu'il est mesuré à 20°C.

12. Adhésif selon la revendication 1, possédant un facteur de perte Tan Delta compris entre 0,4 et 1 à la fréquence à laquelle le module de conservation est à un point d'intersection avec une valeur de 10.000 Pa, lorsqu'il est mesuré à 20°C.

13. Adhésif thermofusible sensible à la pression qui est un adhésif suivant la revendication 1.

14. utilisation d'un adhésif pour la production d'étiquettes impliquant une opération de découpage à la presse comprenant un adhésif suivant la revendication 1.

15. Adhésif selon la revendication 1, dans lequel le plateau de module de conservation se produit à des fréquences en dessous de 1,59 Hz (10 rad/s), lorsqu'il est mesuré à 20°C.

16. Adhésif selon la revendication 1, dans lequel l'agent collant comprend un ester de colophane et/ou un polyterpène.

17. Adhésif selon la revendication 1, dans lequel l'agent collant est compatible avec la phase de polybutadiène.

18. Adhésif selon la revendication 1, dans lequel le tribloc styrène/isoprène/styrène a une masse moléculaire comprise entre 100.000 et 180.000 g/mole et le dibloc styrène/butadiène possède une masse moléculaire comprise entre 65.000 et 110.000 g/mole, l'adhésif contenant un mélange d'additifs d'agent collant dont un est liquide à température ambiante et dont au moins un est solide à température ambiante, pour un total de 50 à 80 pour cent en poids de l'adhésif.
